(19) **Europäisches Patentamt / European Patent Office / Office européen des brevets**

(11) **EP 4 597 828 A1**

(12) **EUROPEAN PATENT APPLICATION**
published in accordance with Art. 153(4) EPC

(43) Date of publication:
06.08.2025 Bulletin 2025/32

(21) Application number: 23888270.8

(22) Date of filing: 09.02.2023

(51) International Patent Classification (IPC):
*H02P 27/06* $^{(2006.01)}$

(52) Cooperative Patent Classification (CPC):
H02P 27/06

(86) International application number:
PCT/JP2023/004308

(87) International publication number:
WO 2024/100911 (16.05.2024 Gazette 2024/20)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 07.11.2022 JP 2022178328

(71) Applicant: Mitsubishi Heavy Industries Thermal
Systems, Ltd.
Tokyo 100-8332 (JP)

(72) Inventors:
• KOMIYA Shinichi
  Tokyo 100-8332 (JP)
• AIBA Kenichi
  Tokyo 100-8332 (JP)
• SHIMIZU Kenji
  Tokyo 100-8332 (JP)

(74) Representative: Cabinet Beau de Loménie
103, rue de Grenelle
75340 Paris Cedex 07 (FR)

(54) **CONTROL DEVICE, CONTROL METHOD, AND AIR CONDITIONER**

(57) This control device controls an inverter for AC-driving a motor that rotates using a magnet torque and a reluctance torque. When estimating the mechanical angular speed and position of the rotor of the motor on the basis of the values of d-axis current and q-axis current flowing through the motor and the number of pole pairs of the motor, the control device removes harmonic components of 6n-th order (where, n includes 1, 2, and 0 or more natural numbers of 3 or more) from the values of d-axis current and q-axis current or the estimated angular speed of the rotor to estimate the mechanical angular speed and the position and controls the inverter using the estimated mechanical angular speed and position, said harmonic components at least including the 6-th order and 12-th order of a value obtained by multiplying the mechanical angular speed by the number of pole pairs.

FIG. 1

EP 4 597 828 A1

**Description**

Technical Field

The present disclosure relates to a control device, a control method, and an air conditioner. Priority is claimed on Japanese Patent Application No. 2022-178328, filed November 7, 2022, the content of which is incorporated herein by reference.

Background Art

For example, PTLs 1 and 2 disclose control devices that control a motor by using a speed and a rotational position (rotational angle) of the motor estimated based on a value of a current flowing through the motor.

In addition, PTL 2 describes the following regarding harmonic components generated in an interior permanent magnet synchronous motor (IPMSM) that rotates using a magnet torque and a reluctance torque. That is, in PTL 2, it is described that "Even-order harmonics are not excited due to the point symmetry of a waveform of a rotor magnetic flux including space harmonics. In addition, since there are no 3n-th harmonic components in a three-phase connection, the harmonic components of the rotor magnetic flux are $(6n\pm1)$th-order components. Experimentally, it has been known that a motor (IPMSM) 6 has $(6\pm1)$th and $(12\pm1)$th harmonic components as main components, and through dq axis coordinate conversion, $(6\pm1)$th becomes 6th order, and $(12\pm1)$th becomes 12th order." (paragraph 0046 of PTL 2).

In addition, PTL 3 describes the following regarding harmonic components of reluctance torque ripple. That is, in PTL 3, it is described that "As is well known to those skilled in the art, in a synchronous electric motor that generates a reluctance torque, main components of space-dependent reluctance torque ripple are 6th-order and 12th-order components." (paragraph 0041 of PTL 3).

Citation List

Patent Literature

[PTL 1] Japanese Unexamined Patent Application Publication No. 2008-245506
[PTL 2] Japanese Unexamined Patent Application Publication No. 2021-136806
[PTL 3] Japanese Unexamined Patent Application Publication No. 2021-121163

Summary of Invention

Technical Problem

In the control devices described in PTLs 1 and 2, when the speed and the rotational position of the motor are estimated, there is a case where the estimation is affected by the harmonic components described above generated in the motor. Therefore, there is a problem in that further improvement in estimation accuracy of the speed and the rotational position of the motor is desired.

The present disclosure has been made to solve the above problems, and an object of the present disclosure is to provide a control device, a control method, and an air conditioner capable of accurately estimating a rotational position and a speed of a motor.

Solution to Problem

In order to solve the above problems, a control device according to the present disclosure is a control device for controlling an inverter that AC-drives a motor that rotates using a magnet torque and a reluctance torque, in which, in a case where a mechanical angular velocity and a position of a rotor of the motor are estimated based on a d-axis current value and a q-axis current value of a d-axis current and a q-axis current flowing through the motor and the number of pole pairs of the motor, the control device removes 6n-th (n includes 1 and 2, and 0 or more natural numbers of 3 or more) harmonic components including at least 6th and 12th orders of a value obtained by multiplying the mechanical angular velocity by the number of pole pairs, from the d-axis current value and the q-axis current value or from an estimated angular velocity of the rotor, and estimates the mechanical angular velocity and the position, and the control device controls the inverter by using the estimated mechanical angular velocity and the position.

A control method according to the present disclosure is a control method for controlling an inverter that AC-drives a motor that rotates using a magnet torque and a reluctance torque, the control method including: in a case where a mechanical angular velocity and a position of a rotor of the motor are estimated based on a d-axis current value and a q-axis current value of a d-axis current and a q-axis current flowing through the motor and the number of pole pairs of the motor, removing 6n-th (n includes 1 and 2, and 0 or more natural numbers of 3 or more) harmonic components including at least 6th and 12th orders of a value obtained by multiplying the mechanical angular velocity by the number of pole pairs, from the d-axis current value and the q-axis current value or from an estimated angular velocity of the rotor, and estimating the mechanical angular velocity and the position of the rotor are estimated; and controlling the inverter by using the estimated mechanical angular velocity and position.

An air conditioner according to the present disclosure includes: a compressor; a motor that rotationally drives the compressor using a magnet torque and a reluctance torque; an inverter that AC-drives the motor; and a control device that controls the inverter, in which, in a case where a mechanical angular velocity and a position of a rotor of the motor are estimated based on a d-axis current value and a q-axis current value of a d-axis current and a q-axis current flowing through the motor and the number of pole pairs of the motor, the control device removes 6n-th (n includes 1 and 2, and 0 or more natural numbers of 3 or more) harmonic components including at least 6th and 12th orders of a value obtained by multiplying the mechanical angular velocity by the number of pole pairs, from the d-axis current value and the q-axis current value or from an estimated angular velocity of the rotor, and estimates the mechanical angular velocity and the position of the rotor, and the control device controls the inverter by using the estimated mechanical angular velocity and position.

Advantageous Effects of Invention

According to the control device, the control method, and the air conditioner of the present disclosure, the rotational position and the speed of the motor can be accurately estimated.

Brief Description of Drawings

Fig. 1 is a block diagram showing a configuration example of a control device for a motor according to a first embodiment of the present disclosure.
Fig. 2 is a block diagram showing a configuration example of a speed/position estimation unit according to the first embodiment of the present disclosure.
Fig. 3 is a block diagram showing another configuration example of the speed/position estimation unit according to the first embodiment of the present disclosure.
Fig. 4 is a schematic diagram for describing an example of estimation of speed and position according to the first embodiment of the present disclosure.
Fig. 5 is a schematic diagram showing a configuration example of a normalized torque pattern table according to the first embodiment of the present disclosure.
Fig. 6 is a diagram showing an example of a relationship between a rotor rotational angle and a plurality of coefficient values in the normalized torque pattern table according to the first embodiment of the present disclosure.
Fig. 7 is a block diagram showing a configuration example of a control device for a motor according to a second embodiment of the present disclosure.
Fig. 8 is a schematic diagram for describing the configuration example of the control device for a motor according to the second embodiment of the present disclosure.
Fig. 9 is a schematic block diagram showing a configuration of a computer according to at least one embodiment.

Description of Embodiments

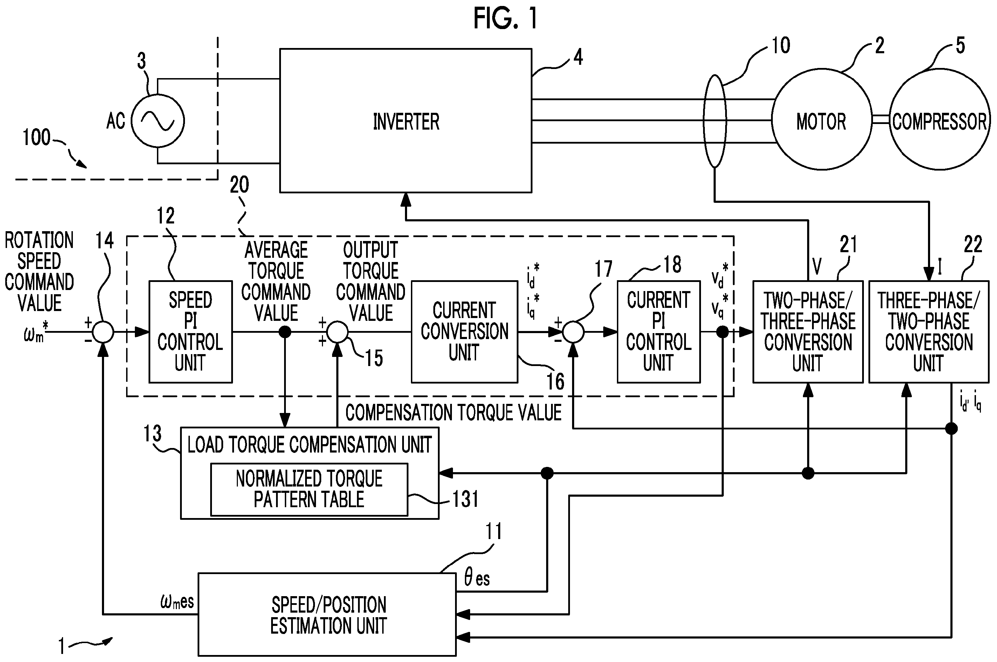

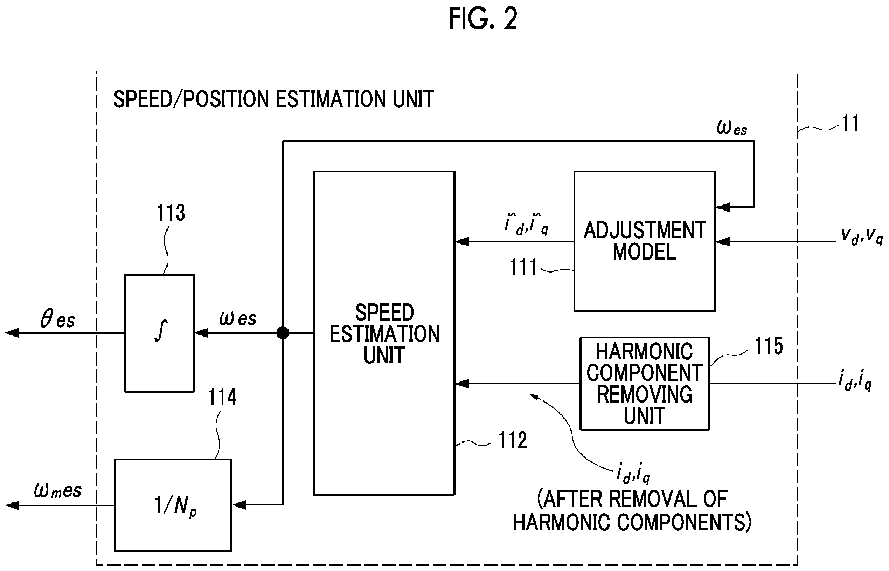

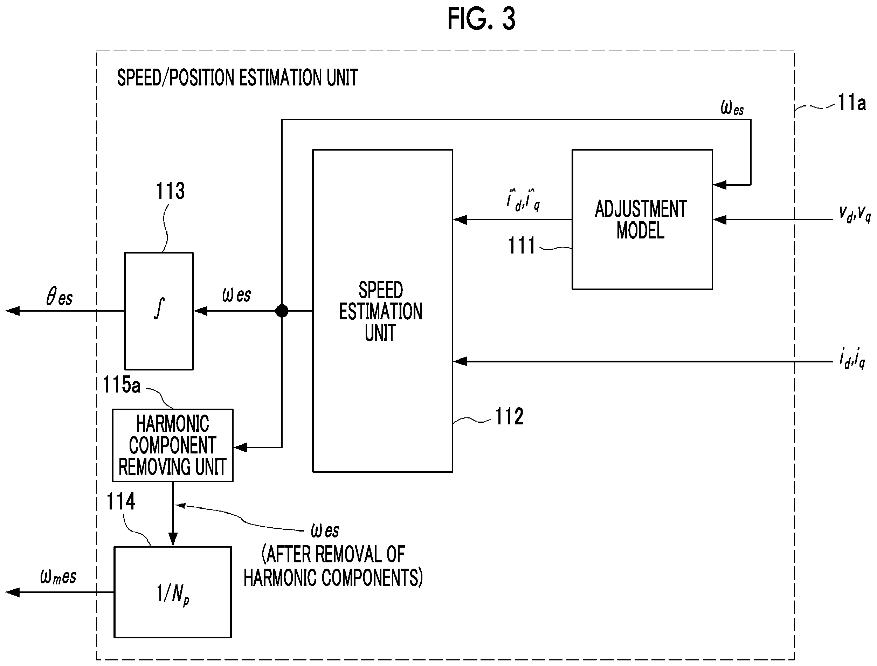

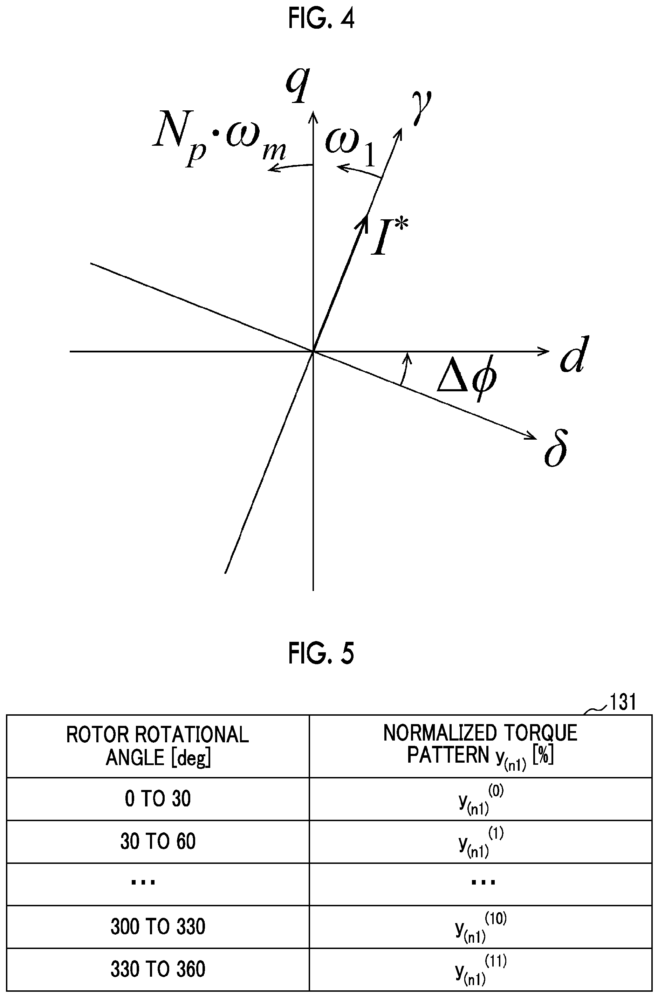

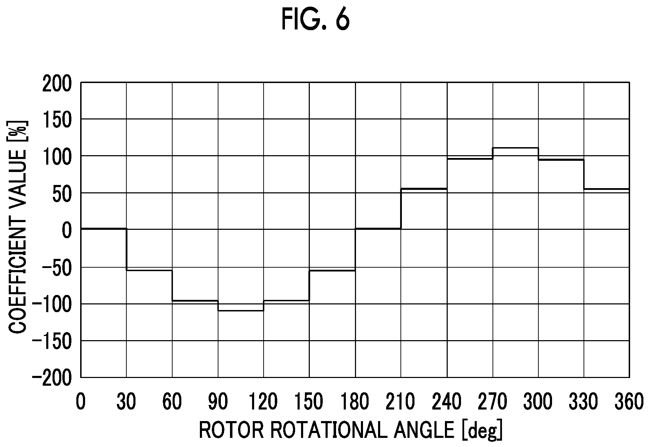

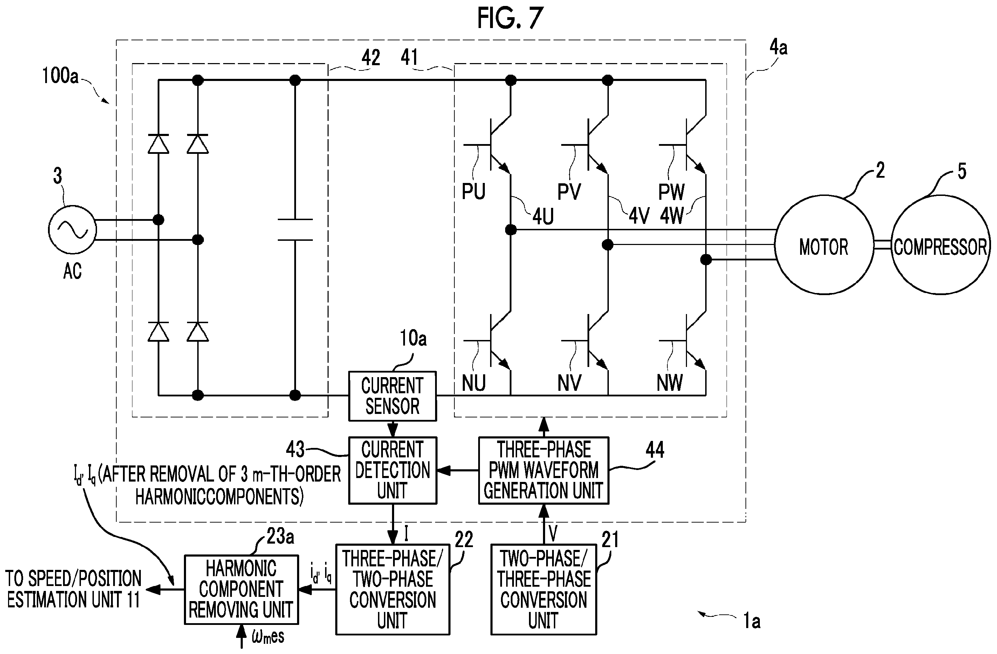

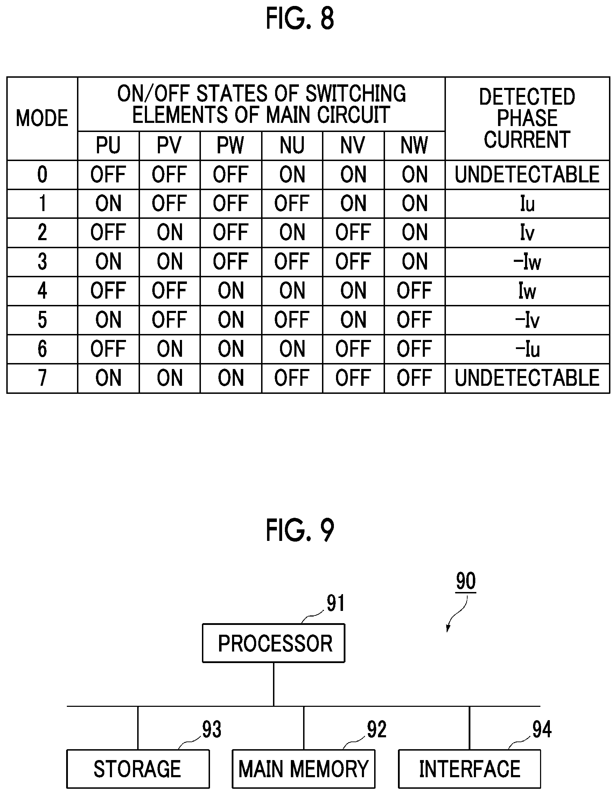

Hereinafter, a control device, a control method, and an air conditioner according to embodiments of the present disclosure will be described with reference to Figs. 1 to 9. Fig. 1 is a block diagram showing a configuration example of a control device for a motor according to a first embodiment of the present disclosure. Fig. 2 is a block diagram showing a configuration example of a speed/position estimation unit according to the first embodiment of the present disclosure. Fig. 3 is a block diagram showing another configuration example of the speed/position estimation unit according to the first embodiment of the present disclosure. Fig. 4 is a schematic diagram for describing an example of estimation of speed and position according to the first embodiment of the present disclosure. Fig. 5 is a schematic diagram showing a configuration example of a normalized torque pattern table according to the first embodiment of the present disclosure. Fig. 6 is a diagram showing an example of a relationship between a rotor rotational angle and a plurality of coefficient values in the normalized torque pattern table according to the first embodiment of the present disclosure. Fig. 7 is a block diagram showing a configuration example of a control device for a motor according to a second embodiment of the present disclosure. Fig. 8 is a schematic diagram for describing the configuration example of the control device for a motor according to the second embodiment of the present disclosure. Fig. 9 is a schematic block diagram showing a configuration of a computer according to at least one embodiment. In each drawing, identical or corresponding configurations are denoted by the same reference numerals, and the description thereof will be omitted as appropriate.

<First Embodiment>

Fig. 1 shows a configuration example of a control device 1 according to a first embodiment of the present disclosure. The control device 1 is a control device that controls an inverter 4 that AC-drives a motor 2 that rotationally drives a compressor 5 included in an air conditioner 100. The motor 2 is, for example, an IPMSM that rotates using a magnet torque and a reluctance torque. The inverter 4 supplies power to the motor 2 using an AC power supply 3 as a power source. A current sensor 10 detects a value of a current flowing from the inverter 4 to the motor 2. In the example shown in Fig. 1, the air conditioner 100 includes the control device 1, the motor 2, the inverter 4, and the current sensor 10. The control device 1 includes, for example, a computer such as a microcomputer, and peripheral devices, peripheral circuits, and the like of the computer. Then, the control device 1 includes, as a functional configuration composed of a combination of hardware such as a computer and software such as a program executed by the computer, a subtraction unit 14, a speed control unit 20, a load torque compensation unit 13, a speed/position estimation unit 11, a two-phase/three-phase conversion unit 21, and a three-phase/two-phase conversion unit 22. The speed control unit 20 includes a speed PI control unit (speed proportional integral control unit) 12, an addition unit 15, a current conversion unit 16, a subtraction unit 17, and a current PI control unit 18.

The control device according to the present embodiment is not limited to the example shown in Fig. 1, and may be any control device that controls a motor that rotates using, for example, a magnet torque and a reluctance torque. In addition, the motor 2 is not limited to a motor that drives the compressor 5, and the motor 2 is not limited to a motor that is provided in an air conditioner. Fig. 1 shows a main configuration related to rotation speed control of the motor 2 by the control device 1, and, for example, some other configurations within the air conditioner 100 or the control device 1, such as a refrigerant circuit, a fan, and configurations related to temperature control and humidity control, are not shown.

(Configuration of Control Device)

The three-phase/two-phase conversion unit 22 receives as inputs three-phase current values I detected by the current sensor 10 and a rotational position (rotational angle) $\theta$es of a rotor of the motor 2 estimated by the speed/position estimation unit 11, converts the three-phase current values I detected by the current sensor 10 into a two-phase d-axis current value id and a two-phase q-axis current value iq on a d-axis and a q-axis, and outputs the d-axis current value id and the q-axis current value iq. The current sensor 10 detects, for example, a phase current flowing through the motor 2. However, a configuration of the current sensor 10 is not limited thereto. For example, a configuration can be adopted in which a current flowing through a plurality of switching elements included in the inverter 4 is detected and a phase current is calculated. The two-phase/three-phase conversion unit 21 receives as inputs the rotational position $\theta$es and a two-phase d-axis command voltage value vd* and a two-phase q-axis command voltage value vq* on the d-axis and the q-axis output by the current PI control unit 18, converts the d-axis command voltage value vd* and the q-axis command voltage value vq* into a three-phase voltage value V, and outputs the three-phase voltage value V to the inverter 4. The inverter 4 controls the plurality of switching elements (not shown) included in the inverter based on the three-phase voltage value V output by the two-phase/three-phase conversion unit 21.

The speed/position estimation unit 11 receives as inputs a two-phase d-axis voltage value vd and a two-phase q-axis voltage value vq output by the current PI control unit 18, and the two-phase d-axis current value id and the two-phase q-axis current value iq output by the three-phase/two-phase conversion unit 22, and estimates the rotational position $\theta$es and a rotation speed (mechanical angular velocity) $\omega$mes of the rotor of the motor 2 based on the two-phase d-axis current value id and the two-phase q-axis current value iq, and the number of pole pairs Np of the motor 2.

Fig. 2 shows a configuration example of the speed/position estimation unit 11. In the figure, the speed/position estimation unit 11 includes an adjustment model 111, a speed estimation unit 112, an integrator 113, a divider 114, and a harmonic component removing unit 115.

In the adjustment model 111, a model q-axis current value iq^ and a model d-axis current value id^ are calculated using a data model of the motor 2, based on the q-axis current value iq, the d-axis current value id, and an estimated rotor speed (electrical angular velocity (hereinafter, also simply referred to as an angular velocity)) $\omega$es in the previous clock cycle. For example, a typical data model is as follows. Here, R is a winding resistance, Ld is a d-axis inductance, Lq is a q-axis inductance, Ke is an induced voltage constant, and p is a differential operator (p = d/dt).

$$v_d = (R + p \cdot L_d) i_d - \omega \cdot L_q \cdot i_q ,$$

$$v_q = \omega \cdot L_d \cdot i_d + (R + p \cdot L_q) i_q + \omega \cdot K_e$$

$$\cdots (1)$$

Specifically, the model q-axis current value iq^ and the model d-axis current value id^ are calculated by solving this differential equation using a numerical calculation method such as Runge-Kutta.

In addition, the speed estimation unit 112 receives as inputs the model q-axis current value iq^ and the model d-axis current value id^, and a q-axis current value iq and a d-axis current value id after removal of predetermined harmonic components by the harmonic component removing unit 115, which will be described later, calculates an evaluation function Err shown by the following equation according to Popov's hyperstability theory, and obtains the estimated rotor speed ωes through PI control for the evaluation function Err. It should be noted that there are various ways to obtain the evaluation function Err, and the present invention is not limited to this example.

$$Err = i_d \cdot \hat{i_q} - i_q \cdot \hat{i_d} - \frac{K_e}{L(i_q - \hat{i_q})}$$

$$\cdots (2)$$

$$\omega es = K_p \cdot Err + \int K_i \cdot Err$$

$$\cdots (3)$$

Here, L is an inductance, Kp is a proportional constant, and Ki is an integration constant.

Further, the estimated rotor speed ωes obtained by the speed estimation unit 112 is integrated by the integrator 113 to obtain an estimated rotor position θes. The estimated position θes of the rotor in the next clock cycle supplied to the two-phase/three-phase conversion unit 21 is generated by applying a correction corresponding to the estimated rotor speed ωes to the estimated rotor position θes obtained here.

Here, the harmonic component removing unit 115 will be described. In a motor that rotates using a magnet torque and a reluctance torque as in an IPM SM, 5th-order and 7th-order distortion components of an induced voltage become a 6th-order distortion on the dq axes, and similarly, (6n-1)th-order and (6n+1)th-order distortion components become a 6n-th-order distortion on the dq axes. In addition, 5th-order and 7th-order distortion components of the inductance become a 12th-order distortion on the dq axes, and (6n-1)th-order and (6m+1)th-order distortion components become a 12n-th order on the dq axes. For this reason, in the speed/position estimation unit 11, the influence of the distortion appears in the model q-axis current value iq^ and the model d-axis current value id^ as 6th, 12th, ..., and 6n-th (n is a natural number) orders. The same applies to other estimation methods since variations in the dq axes also occur in the 6n-th order. Here, since the order is based on an electrical angle, in a motor with Np pole pairs, the order is a 6n-th order of a value obtained by multiplying rotation speed (mechanical angular velocity) by the number of pole pairs Np, that is, (6Np × n)th order. For this reason, although an actual speed does not vary, a (6Np × n)th-order estimated speed variation of the rotation speed appears as an error. Therefore, by removing the (6Np × n)th-order estimated speed variation of the rotation speed (mechanical angular velocity) from an estimated speed variation, an error in the estimated speed variation can be reduced in a motor with a large distortion.

Therefore, the harmonic component removing unit 115 of the present embodiment removes 6n-th harmonic components including at least 6th and 12th orders of a value obtained by multiplying the mechanical angular velocity by the number of pole pairs, from the d-axis current value id and the q-axis current value iq input to the speed/position estimation unit 11. In order to remove a specific frequency, any method such as a resonance notch filter or Fourier transform may be used. In addition, in a case where the adjustment is performed to reduce speed variations, when the (6Np × n)th order is greater than k times the rotation speed to be adjusted, the removal may be performed by a low-pass filter (LPF). A value of the coefficient k can be set, for example, according to a frequency corresponding to a desired response speed in speed control. In addition, from the knowledge so far, it is desirable that a value of n includes 1 and 2, that is, includes 6th and 12th orders. In this case, it is desirable that the harmonic component removing unit 115 removes 6n-th harmonic components (n includes 1 and 2, and 0 or more natural numbers of 3 or more (in this case, n includes at least 1 and 2, and may not include a natural number of 3 or more (in the case of 0), or may include one or a plurality of natural numbers of 3 or more)) including at least the 6th and 12th orders of the value obtained by multiplying the mechanical angular velocity by the number of pole pairs, from the d-axis current value id and the q-axis current value iq input to the speed/position estimation unit 11.

However, depending on characteristics of the speed/position estimation unit 11, there are cases where speed/position estimation cannot be performed when the harmonic components are removed from the d-axis current value id and the q-axis current value iq. In this case, as shown in Fig. 3, the speed estimation unit 112 of a speed/position estimation unit 11a (configuration corresponding to the speed/position estimation unit 11 in Fig. 2) receives as inputs the d-axis current value id and the q-axis current value iq as they are without removing the harmonic components from the d-axis current value id and the q-axis current value iq output by the three-phase/two-phase conversion unit 22. Then, the (6Np × n)th harmonic components of the rotation speed are removed by a harmonic component removing unit 115a from an output of the estimated speed ωes which is estimated. In this configuration, the error in the estimated speed variations can be reduced in the motor with a large distortion. In the configuration example shown in Fig. 3, the estimated speed ωes output by the speed estimation unit 112 is input to the harmonic component removing unit 115a, and an output of the harmonic component removing unit 115a is input to the divider 114. However, for example, the output of the harmonic component removing unit 115a may be input to the integrator 113 or the adjustment model 111 instead of the estimated speed ωes output by the speed estimation unit 112.

In addition, the divider 114 calculates the rotation speed (mechanical angular velocity) ωmes of the rotor of the motor 2 by dividing the estimated rotor speed ωes by the number of pole pairs Np of the motor 2.

In the present embodiment, when performing the speed estimation, the speed/position estimation unit 11 can perform the estimation using, for example, a motor constant or the induced voltage in addition to the d-axis current value id and the q-axis current value iq. At this time, the inductance or the induced voltage waveform of the motor 2 can be determined on the premise of, for example, a sine wave. Fig. 4 shows the definition of axes used at the time of estimation. The coordinates of the estimated position are defined as δγ axes, while the coordinates of an actual position are defined as dq axes. A difference between the actual position and the estimated position is denoted by Δφ. In the adjustment model 111, the model q-axis current value iq^ and the model d-axis current value id^ are calculated using the data model of the motor 2 shown in Equation (1) based on the q-axis current value iq, the d-axis current value id, and the estimated rotor speed ωes in the previous clock cycle. The speed estimation unit 112 obtains the estimated speed ωes through PI control (Kp × Err + ∫Ki × Err) using the evaluation function Err related to the error Δφ between the actual position and the estimated position. When Δφ is positive, the estimated position is delayed with respect to the actual position, so that the estimated speed is increased. On the contrary, when Δφ is negative, the estimated speed is decreased. Accordingly, the evaluation function Err converges to 0.

The subtraction unit 14 subtracts the rotation speed ωmes from a rotation speed (mechanical angular velocity) command value ωm* to calculate a deviation Δωm, and outputs the deviation Δωm to the speed PI control unit 12.

The speed PI control unit 12 calculates an average torque command value, which is an average value of an output torque command value of the motor 2 for reducing the deviation Δωm through a proportional integration operation with regard to the deviation Δωm, and outputs the average torque command value to the addition unit 15 and the load torque compensation unit 13. In this case, the speed PI control unit 12 calculates and outputs an average output torque command value according to the deviation Δωm between the rotation speed ωmes of the motor 2 and the rotation speed command value ωm*.

The load torque compensation unit 13 includes a normalized torque pattern table 131, receives as inputs the average torque command value output by the speed PI control unit 12 and the rotational position θes output by the speed/position estimation unit 11, calculates a compensation torque value using the normalized torque pattern table 131, and outputs the compensation torque value to the addition unit 15. The compensation torque value is a torque value for compensating for variations in a load torque of the motor 2 during one rotation of the motor 2.

The normalized torque pattern table 131 is a table that defines a normalized torque pattern that is a pattern of a plurality of coefficient values that change according to the rotational position (rotational angle) θes of the motor 2. In the present embodiment, the motor 2 drives the compressor 5 such as a rotary compressor. In the rotary compressor, a change in refrigerant gas pressure occurs in each of intake, compression, and discharge strokes during one rotation, and thus steady load torque variations occur. Therefore, in the present embodiment, the output torque command is compensated in accordance with the estimated rotor position by the product of the average torque and the normalized torque pattern, thereby suppressing the speed variations of the motor.

The load torque compensation unit 13 determines a coefficient value according to the rotational position (rotational angle) θes of the motor 2 based on the normalized torque pattern table 131, and calculates the compensation torque value by multiplying the average torque command value by the determined coefficient value. The compensation torque value and the coefficient value take positive, negative, or zero values. In this case, the load torque compensation unit 13 calculates the compensation torque value at each rotational position using the equation "compensation torque value at each rotational position = average torque command value × normalized torque pattern at each rotational position". By adding the compensation torque value to the average torque command value, the output torque command value (output value of the addition unit 15) in which the variation in the load torque is compensated for according to the rotational position θes is calculated. The compensation torque value is a value that compensates for the load torque variation during one rotation, and it is required that the average value of the output torque command values for one rotation compensated for by the compensation torque value matches the average torque command value. That is, it is required that a total value of the compensation torque values for one rotation is zero. In this case, it is required that a total value of the coefficient values constituting (defining) the normalized torque pattern for one rotation is also zero. Fig. 5 shows a configuration example of the normalized torque pattern table 131. In addition, Fig. 6 shows an example of a relationship between the rotor rotational angle and the plurality of coefficient values, in which a horizontal axis represents the rotor rotational angle [deg] and a vertical axis represents the coefficient value [%].

In the example shown in Fig. 5, the normalized torque pattern table 131 divides one rotation of 360 degrees into 12 sections each having 30 degrees and sets a coefficient value y(n1)(m1) for each section. Here, n1 represents the number of times of adjustment in a case where the normalized torque pattern table 131 is adjusted to reduce the speed variation. In addition, m represents a section number (m1 = 0 to 11). A pattern of the coefficient values y(n1)(m1) is referred to as a normalized torque pattern y(n1). As described above, the coefficient values y(n1)(m1) are set such that the total value for one rotation is zero.

The number of divisions of the rotational position in the normalized torque pattern table 131, that is, the number of divisions of a phase axis can be determined as follows. That is, in order to deal with a reduction in the load torque variation of the compressor 5 up to a k-th-order component, the phase axis of the normalized torque pattern is divided into 2 × lcm (1, ..., k) × ndiv. 2 represents a coefficient based on the sampling theorem. lcm(1, ..., k) represents the least common multiple of natural numbers from 1 to k. ndiv is any natural number. Accordingly, the torque variations including harmonics up to the k-th order can be expressed. For example, in a case of a reduction up to 1st-order to 3rd-order components, ndiv is set to 1, the number of divisions is 2 × 6 × 1, so that 12 divisions are made.

The addition unit 15 adds the average torque command value output by the speed PI control unit 12 and the compensation torque value output by the load torque compensation unit 13 to calculate the output torque command value, and outputs the output torque command value to the current conversion unit 16.

The current conversion unit 16 receives as an input the output torque command value output by the addition unit 15, performs current conversion on the output torque command value, calculates a d-axis command current value id* and a q-axis command current value iq*, and outputs the d-axis command current value id* and the q-axis command current value iq* to the subtraction unit 17.

The subtraction unit 17 receives as inputs the d-axis command current value id* and the q-axis command current value iq*, and the d-axis current value id and the q-axis current value iq, respectively subtracts the d-axis current value id and the q-axis current value iq from the d-axis command current value id* and the q-axis command current value iq*, calculates each deviation of a d-axis component and a q-axis component between the command value and the motor current value, and outputs the deviations to the current PI control unit 18.

The current PI control unit 18 calculates the d-axis command voltage value vd* and the q-axis command voltage value vq* for reducing each deviation through the proportional integration operation with regard to each deviation output by the subtraction unit 17, and outputs the d-axis command voltage value vd* and the q-axis command voltage value vq* to the two-phase/three-phase conversion unit 21 and the speed/position estimation unit 11.

(Actions and Effects)

According to the present embodiment, when estimating the position and the speed, error components due to the components caused by the distortion of the motor are removed from the current value or the estimated speed. Therefore, errors in the position and the estimated speed are reduced, and the motor can be correctly controlled, thereby suppressing, for example, speed variations. According to the present embodiment, the rotational position and the speed of the motor can be accurately estimated.

<Second Embodiment>

Fig. 7 shows a configuration example of a control device 1a and an inverter 4a according to a second embodiment of the present disclosure. The second embodiment is different from the control device 1 of the first embodiment in that the control device 1a is newly provided with a harmonic component removing unit 23a. The control device 1 and the control device 1a are the same in other configurations. In addition, in the second embodiment, in an air conditioner 100a corresponding to the air conditioner 100 in Fig. 1, the inverter 4a is internally provided a configuration corresponding to the current sensor 10 shown in Fig. 1 as a current sensor 10a, and the phase current of the motor 2 is calculated based on a result of detecting a DC current on an input side of the inverter 4a by the current sensor 10a. Here, the current sensor 10a detects each phase current at a shifted timing in synchronization with the on/off timing of a predetermined switching element. Due to the difference in timing, 3m-th harmonic components of the estimated speed (electrical angular velocity) occur in the detected current (m is a natural number). It is desirable that m includes at least 1. Therefore, in the present embodiment, the harmonic component removing unit 23a removes 3m-th (m includes 1, and 0 or more natural numbers of 2 or more) harmonic components of the value obtained by multiplying the mechanical angular velocity ωmes by the number of pole pairs Np, from the d-axis current value and the q-axis current value input to the speed/position estimation unit 11. In this case, in the control device 1a, by combining the harmonic component removing unit 23a and the harmonic component removing unit 115 shown in Fig. 2, the 6n-th (n includes 1 and 2, and 0 or more natural numbers of 3 or more) harmonic components including at least the 6th and 12th orders of the value obtained by multiplying the mechanical angular velocity ωmes of the rotor of the motor 2 by the number of pole pairs Np, and the 3m-th (m includes 1, and 0 or more natural numbers of 2 or more) harmonic components of the value obtained by multiplying the mechanical angular velocity ωmes by the number of pole pairs Np are removed from the d-axis current value and the q-axis current value. The variable n and the variable m may be the same or may be different. In addition, the harmonic component removing unit 23a and the harmonic component removing unit 115 may be configured integrally.

The control device 1a and the inverter 4a shown in Fig. 7 are configurations corresponding to the control device 1 and the inverter 4 shown in Fig. 1, respectively. In addition, a combination of the current sensor 10a and a current detection unit 43 shown in Fig. 7 corresponds to the current sensor 10 shown in Fig. 1. In addition, other configurations except for the harmonic component removing unit 23a are basically the same as those in the first embodiment and the second embodiment.

As shown in Fig. 7, the inverter 4a includes a main circuit 41 of a three-phase PWM (pulse width modulation) inverter, a rectification circuit 42 that converts AC power supplied from the AC power supply 3 into DC power, the current sensor 10a through which a current that returns to the main circuit 41 via the motor 2 flows, the current detection unit 43, and a three-phase PWM waveform generation unit 44.

The main circuit 41 is connected to the power supply 3 via the rectification circuit 42, and includes a U-phase circuit 4U, a V-phase circuit 4V, and a W-phase circuit 4W. The U-phase circuit 4U includes an upper arm switching element PU and a lower arm switching element NU, the V-phase circuit 4V includes an upper arm switching element PV and a lower arm switching element NV, and the W-phase circuit 4W includes an upper arm switching element PW and a lower arm switching element NW. The upper arm switching element and the lower arm switching element in each circuit are connected in series with each other. Then, an output of each circuit is connected to the three-phase motor 2 including a U-phase coil, a V-phase coil, and a W-phase coil (not shown).

The three-phase PWM waveform generation unit 44 generates a three-phase PWM waveform to be applied to the main circuit 41 based on the three-phase voltage value V from the two-phase/three-phase conversion unit 21.

In the current detection unit 43, from a detection result of the current sensor 10a, the current detection unit 43 calculates current values of a U-phase current Iu, a V-phase current Iv, and a W-phase current Iw of the motor 2 based on a combination of ON/OFF timings of the upper arm switching elements PU to PW and the lower arm switching elements NU to NW shown in Fig. 8. The current detection unit 43 outputs the calculated (detected) three-phase currents I to the three-phase/two-phase conversion unit 22.

In the present embodiment, the motor current is detected by detecting the current flowing through a DC bus of the inverter. Since the current flowing through the current sensor 10a sometimes coincides with the phase current of the motor 2 as shown in Fig. 8, the current detection unit 43 detects each phase current of the motor 2 by reading the phase current in synchronization with a three-phase PWM signal. In this case, the timing of detecting the three-phase motor current does not occur simultaneously for all three phases and changes, and thus the current has an error including a ripple component caused by PWM. In addition, since current detection is switched between three phases, the estimated speed variation has an error of a 3m-th order (m includes 1, and 0 or more natural numbers of 2 or more) in the electrical angle. In the case of a motor having Np pole pairs, the harmonic components are of (3Np × m)th order of the rotation speed. In this case, although the actual speed does not vary, a (3Np × m)th-order estimated speed variation of the rotation speed appears as an error. Therefore, the harmonic component removing unit 23a removes the 3m-th (m includes 1, and 0 or more natural numbers of 2 or more) of the value obtained by multiplying the mechanical angular velocity ωmes of the rotor of the motor 2 by the number of pole pairs Np, from the d-axis current value and the q-axis current value input to the speed/position estimation unit 11. According to this, the (3Np × m)th-order estimated speed variation of the rotation speed can be removed from the estimated speed variation, so that the error in the motor current detection due to the DC bus current can be reduced. In order to remove a specific frequency, any method such as a resonance notch filter or Fourier transform may be used. In addition, in a case where adjustment is performed to reduce the speed variation, when the (3Np × m)th order or the (6Np × n)th order is greater than a k-th order of the rotation speed to be adjusted, the removal may be performed by the LPF.

(Actions and Effects)

According to the present embodiment, when the d-axis current value and the q-axis current value are calculated based on the detection result of the direct current on the input side of the inverter 4a, the 3m-th harmonic components are removed. Therefore, the rotational position and the speed of the motor can be accurately estimated.

<Actions and Effects>

According to the control device, the control method, and the air conditioner according to each of the above-described embodiments, the rotational position and the speed of the motor can be accurately estimated.

(Other Embodiments)

While the embodiments of the present disclosure have been described above in detail with reference to the drawings, the specific configuration is not limited to the embodiments, and includes design changes and the like within a scope not departing from the gist of the present disclosure. For example, since the mechanical angular velocity and the electrical angular velocity can be converted into each other, both may be used as calculation targets, the electrical angular velocity may be used instead of the mechanical angular velocity, or the mechanical angular velocity may be used instead of the electrical angular velocity.

<Computer Configuration>

Fig. 9 shows a configuration of a computer according to at least one embodiment.
A computer 90 includes a processor 91, a main memory 92, a storage 93, and an interface 94.
The control devices 1 and 1a described above are mounted in the computer 90. An operation of each processing unit described above is stored in the storage 93 in the form of a program. The processor 91 reads out the program from the storage 93, loads the program into the main memory 92, and executes the above process according to the program. In addition, the processor 91 secures a storage area corresponding to each storage unit described above in the main memory 92 according to the program.
The program may be intended to realize some of functions performed by the computer 90. For example, the program may exhibit its function by using a combination with other programs already stored in the storage or by using a combination with other programs implemented on other devices. In another embodiment, the computer may include a custom large scale integrated (LSI) circuit such as a programmable logic device (PLD) in addition to or instead of the above configuration. Examples of the PLD include a programmable array logic (PAL), a generic array logic (GAL), a complex programmable logic device (CPLD), and a field programmable gate array (FPGA). In this case, some or all of the functions implemented by the processor may be realized by the integrated circuit.
Examples of the storage 93 include a hard disk drive (HDD), a solid state drive (SSD), a magnetic disk, a magneto-optical disk, a compact disc read only memory (CD-ROM), a digital versatile disc read only memory (DVD-ROM), and a semiconductor memory. The storage 93 may be an internal medium directly connected to a bus in the computer 90 or may be an external medium connected to the computer 90 via an interface 94 or via a communication line. In a case where the program is distributed to the computer 90 through the communication line, the computer 90 that receives the distribution may load the program into the main memory 92 and execute the above process. In at least one embodiment, the storage 93 is a non-transitory tangible storage medium.

<Supplementary Notes>

The control devices 1 and 1a described in each embodiment are understood as follows, for example.

(1) The control devices 1 and 1a according to a first aspect are the control devices 1 and 1a for controlling the inverters 4 and 4a that AC-drive the motor 2 that rotate using the magnet torque and the reluctance torque, in which, in a case where a mechanical angular velocity and a position of a rotor of the motor are estimated based on a d-axis current value and a q-axis current value of a d-axis current and a q-axis current flowing through the motor and the number of pole pairs Np of the motor, the control device removes 6n-th (n includes 1 and 2, and 0 or more natural numbers of 3 or more) harmonic components including at least 6th and 12th orders of a value obtained by multiplying the mechanical angular velocity by the number of pole pairs, from the d-axis current value and the q-axis current value or from an estimated angular velocity of the rotor, and estimates the mechanical angular velocity and the position, and the control device controls the inverter by using the estimated mechanical angular velocity and the position. According to this aspect and each of the following aspects, the rotational position and the speed of the motor can be accurately estimated.
(2) The control device 1a according to a second aspect is the control device 1a of (1), in which the d-axis current value and the q-axis current value are calculated based on a detection result of a DC current on an input side of the inverter, and the control device further removes 3m-th (m includes 1, and 0 or more natural numbers of 2 or more) harmonic components of the value obtained by multiplying the mechanical angular velocity by the number of pole pairs, from the d-axis current value and the q-axis current value. According to this aspect, the harmonic components that occur in association with the current detection can be removed.

Industrial Applicability

According to the control device, the control method, and the air conditioner of the present disclosure, the rotational position and the speed of the motor can be accurately estimated.

Reference Signs List

1, 1a: control device
2: motor
3: AC power supply
4, 4a: inverter
5: compressor
10, 10a: current sensor
11, 11a: speed/position estimation unit
12: speed PI control unit
13: load torque compensation unit
14: subtraction unit
15: addition unit
16: current conversion unit
17: subtraction unit
18: current PI control unit
20: speed control unit
115, 115a, 23a: harmonic component removing unit
27: addition unit
100, 100a: air conditioner
131: normalized torque pattern table

**Claims**

1. A control device for controlling an inverter that AC-drives a motor that rotates using a magnet torque and a reluctance torque,

   wherein, in a case where a mechanical angular velocity and a position of a rotor of the motor are estimated based on a d-axis current value and a q-axis current value of a d-axis current and a q-axis current flowing through the motor and the number of pole pairs of the motor,
   the control device removes 6n-th (n includes 1 and 2, and 0 or more natural numbers of 3 or more) harmonic components including at least 6th and 12th orders of a value obtained by multiplying the mechanical angular velocity by the number of pole pairs, from the d-axis current value and the q-axis current value or from an estimated angular velocity of the rotor to estimate the mechanical angular velocity and the position, and
   the control device controls the inverter by using the estimated mechanical angular velocity and position.

2. The control device according to Claim 1,

   wherein the d-axis current value and the q-axis current value are calculated based on a detection result of a DC current on an input side of the inverter, and
   the control device further removes 3m-th (m includes 1, and 0 or more natural numbers of 2 or more) harmonic components of the value obtained by multiplying the mechanical angular velocity by the number of pole pairs, from the d-axis current value and the q-axis current value.

3. A control method for controlling an inverter that AC-drives a motor that rotates using a magnet torque and a reluctance torque, the control method comprising:

in a case where a mechanical angular velocity and a position of a rotor of the motor are estimated based on a d-axis current value and a q-axis current value of a d-axis current and a q-axis current flowing through the motor and the number of pole pairs of the motor,

removing 6n-th (n includes 1 and 2, and 0 or more natural numbers of 3 or more) harmonic components including at least 6th and 12th orders of a value obtained by multiplying the mechanical angular velocity by the number of pole pairs, from the d-axis current value and the q-axis current value or from an estimated angular velocity of the rotor to estimate the mechanical angular velocity and the position of the rotor are estimated; and

controlling the inverter by using the estimated mechanical angular velocity and position.

4. An air conditioner comprising:

a compressor;

a motor that rotationally drives the compressor using a magnet torque and a reluctance torque;

an inverter that AC-drives the motor; and

a control device that controls the inverter,

wherein, in a case where a mechanical angular velocity and a position of a rotor of the motor are estimated based on a d-axis current value and a q-axis current value of a d-axis current and a q-axis current flowing through the motor and the number of pole pairs of the motor,

the control device removes 6n-th (n includes 1 and 2, and 0 or more natural numbers of 3 or more) harmonic components including at least 6th and 12th orders of a value obtained by multiplying the mechanical angular velocity by the number of pole pairs, from the d-axis current value and the q-axis current value or from an estimated angular velocity of the rotor to estimate the mechanical angular velocity and the position of the rotor, and

the control device controls the inverter by using the estimated mechanical angular velocity and position.

**FIG. 1**

## FIG. 2

SPEED/POSITION ESTIMATION UNIT

$\omega_{es}$

11

113

$\int$

$\theta_{es}$   $\omega_{es}$

ADJUSTMENT MODEL

$\hat{i}_d, \hat{i}_q$

$v_d, v_q$

111

SPEED ESTIMATION UNIT

114

$1/N_p$

$\omega_m es$

112

HARMONIC COMPONENT REMOVING UNIT

115

$i_d, i_q$

$i_d, i_q$
(AFTER REMOVAL OF HARMONIC COMPONENTS)

EP 4 597 828 A1

13

## FIG. 3

SPEED/POSITION ESTIMATION UNIT — 11a

ADJUSTMENT MODEL — 111, inputs $\hat{i}_d, \hat{i}_q$, $\omega_{es}$, $v_d, v_q$

SPEED ESTIMATION UNIT — 112, inputs $i_d, i_q$, output $\omega_{es}$

113 — $\int$, output $\theta_{es}$

115a — HARMONIC COMPONENT REMOVING UNIT

114 — $1/N_p$, output $\omega_m es$

$\omega_{es}$ (AFTER REMOVAL OF HARMONIC COMPONENTS)

EP 4 597 828 A1

## FIG. 4

## FIG. 5

| ROTOR ROTATIONAL ANGLE [deg] | NORMALIZED TORQUE PATTERN $y_{(n1)}$ [%] |
|---|---|
| 0 TO 30 | $y_{(n1)}^{(0)}$ |
| 30 TO 60 | $y_{(n1)}^{(1)}$ |
| ... | ... |
| 300 TO 330 | $y_{(n1)}^{(10)}$ |
| 330 TO 360 | $y_{(n1)}^{(11)}$ |

~131

FIG. 6

# FIG. 7

TO SPEED/POSITION ESTIMATION UNIT 11

$I_d$, $I_q$ (AFTER REMOVAL OF 3 m-TH-ORDER HARMONIC COMPONENTS)

EP 4 597 828 A1

# FIG. 8

| MODE | ON/OFF STATES OF SWITCHING ELEMENTS OF MAIN CIRCUIT | | | | | | DETECTED PHASE CURRENT |
|---|---|---|---|---|---|---|---|
| | PU | PV | PW | NU | NV | NW | |
| 0 | OFF | OFF | OFF | ON | ON | ON | UNDETECTABLE |
| 1 | ON | OFF | OFF | OFF | ON | ON | Iu |
| 2 | OFF | ON | OFF | ON | OFF | ON | Iv |
| 3 | ON | ON | OFF | OFF | OFF | ON | −Iw |
| 4 | OFF | OFF | ON | ON | ON | OFF | Iw |
| 5 | ON | OFF | ON | OFF | ON | OFF | −Iv |
| 6 | OFF | ON | ON | ON | OFF | OFF | −Iu |
| 7 | ON | ON | ON | OFF | OFF | OFF | UNDETECTABLE |

# FIG. 9

90

91

PROCESSOR

93 STORAGE

92 MAIN MEMORY

94 INTERFACE

## INTERNATIONAL SEARCH REPORT

| International application No. |
|---|
| **PCT/JP2023/004308** |

| A. | CLASSIFICATION OF SUBJECT MATTER |
|---|---|

***H02P 27/06***(2006.01)i

FI:  H02P27/06

According to International Patent Classification (IPC) or to both national classification and IPC

| B. | FIELDS SEARCHED |
|---|---|

Minimum documentation searched (classification system followed by classification symbols)

H02P27/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2009-296788 A (DENSO CORP) 17 December 2009 (2009-12-17) paragraphs [0022]-[0056], [0064], fig. 1-3 | 1-4 |
| Y | WO 2020/240748 A1 (MITSUBISHI ELECTRIC CORP  ) 03 December 2020 (2020-12-03) paragraphs [0046], [0069] | 1-4 |
| Y | JP 9-56176 A (MATSUSHITA ELECTRIC IND CO LTD) 25 February 1997 (1997-02-25) paragraphs [0003], [0010]-[0013], fig. 1-3, 5, 7 | 2 |
| A | JP 2004-120993 A (LG ELECTRONICS INC) 15 April 2004 (2004-04-15) paragraphs [0016]-[0071], fig. 1-6 | 1-4 |
| A | JP 2009-95145 A (DENSO CORP) 30 April 2009 (2009-04-30) paragraphs [0089]-[0094], fig. 9 | 1-4 |

☐ Further documents are listed in the continuation of Box C.       ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 March 2023** | **11 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/004308**

| Patent document cited in search report | | | Publication date (day/month/year) | Patent family member(s) | Publication date (day/month/year) |
|---|---|---|---|---|---|
| JP | 2009-296788 | A | 17 December 2009 | (Family: none) | |
| WO | 2020/240748 | A1 | 03 December 2020 | (Family: none) | |
| JP | 9-56176 | A | 25 February 1997 | (Family: none) | |
| JP | 2004-120993 | A | 15 April 2004 | US 2004/0061472 A1 paragraphs [0031]-[0076], fig. 1-6b<br>KR 10-2004-0026845 A<br>CN 1485975 A | |
| JP | 2009-95145 | A | 30 April 2009 | (Family: none) | |

Form PCT/ISA/210 (patent family annex) (January 2015)

**EP 4 597 828 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022178328 A
- JP 2008245506 A
- JP 2021136806 A
- JP 2021121163 A